# EUROPÄISCHE PATENTSCHRIFT

(11) **EP 0 626 546 B1**
(45) Veröffentlichungstag und Bekanntmachung des Hinweises auf die Patenterteilung: **03.09.1997**
(21) Anmeldenummer: 93109919.6
(22) Anmeldetag: 22.06.1993
(51) Int. Cl.: F25B 15/00, F25B 27/00

(54) **Verfahren und Vorrichtung zur Erzeugung von Nutzwärme höherer Temperatur durch Einsatz von Abfallwärme niederer Temperatur**
Method and device for production of available heat of higher temperature using waste heat of lower temperature
Procédé et dispositif de production de chaleur utile à plus haute température utilisant chaleur perdue à plus basse température

(30) Priorität: 25.05.1993 DE 4317298
(43) Veröffentlichungstag der Anmeldung: 30.11.1994
(73) Patentinhaber: Mostofizadeh Ghalamfarsa, Chapar S.M., Prof. Dr.-Ing., 45257 Essen (DE)
(72) Erfinder: Mostofizadeh Ghalamfarsa, Chapar S.M., Prof. Dr.-Ing., 45257 Essen (DE)

(56) Entgegenhaltungen:
- DE-B- 2 219 083
- US-A- 4 311 019
- US-A- 4 333 515
- US-A- 4 553 409
- US-A- 4 702 085

## Beschreibung

Die Erfindung betrifft ein Verfahren zur Erzeugung von Nutzwärme durch Einsatz bisher nicht genutzter Abfallwärme und eine Vorrichtung zur Durchführung eines solchen Verfahrens.

Trotz Einführung vieler Maßnahmen zur Einsparung der Energie innerhalb industrieller Prozesse geht nach wie vor ein erheblicher Teil der eingesetzten Primärenergie als Abfallwärme an die Umgebung über. Beispiele hierfür sind die Trocknung von Milch, Papier, Textilien und Füllstoffen. Dabei entstehen feuchte Brüden mit einer Taupunkttemperatur von 80 - 95°C, die über einen großen Energieinhalt verfügen. Dieser Energieinhalt kann meistens nicht in den vorgeschalteten Prozessen wieder verwendet werden, da die Brüdentemperatur zur Wärmeabgabe nicht ausreicht. Weitere Beispiele findet man bei der Destillation und Rektifikation (Gewinnung von Alkohol und Kohlenwasserstoffen). Auch dort wird die Kondensationswärme am Kolonnenkopf in der Regel als Abfallwärme an die Umgebung (über Kühlwasser oder Kühlluft) abgeführt. Die Abfallwärme läßt sich jedoch nach Anhebung ihrer Temperatur im Prozeß selbst oder für andere Zwecke nutzen. Die Anhebung der Abfallwärmetemperatur kann bekanntlich mit Hilfe von Wärmepumpen und Wärmetransformatoren durchgeführt werden.

Bei der Wärmepumpe muß jedoch hochwertige Energie (mechanische oder elektrische Energie) eingesetzt werden. Außerdem benötigt die Wärmepumpe in der Regel sehr aufwendige Maschinen, wie Hochdruckverdichter, so daß durch hohe Investitions- und Betriebskosten kein wirtschaftlicher Betrieb möglich ist. Wärmetransformatoren benötigen keine hochwertige Energie und bestehen bekanntlich im wesentlichen aus einem Austreiber, einem Kondensator, einem Verdampfer und einem Absorber. Während dem Austreiber und dem Verdampfer die Abfallwärme (z. B. über den Trocknerbrüden) zugeführt wird, gibt der Absorber die Nutzwärme, der Kondensator die (nicht verwertbare) Abwärme ab.

Ein Wärmetransformator kann auch zwecks einer größeren Temperaturanhebung zweistufig ausgeführt werden. Die wesentlichen Nachteile der nach dem Stand der Technik bekannten Wärmetransformatoren sind die häufig nicht ausreichende Temperaturanhebung bei einem akzeptablen Wärmeverhältnis, die aufwendige Fertigung, die großen Verluste bei der Absorption bzw. Desorption und die Gefahr der Kristallausscheidung bei Verwendung von Lithiumbromid / Wasser als Arbeitsgemisch. Hieraus resultiert, daß in vielen technisch relevanten Fällen eine Wärmetransformation nicht oder nicht wirtschaftlich durchgeführt werden kann. Nach dem Stand der Technik können Wirkungsgrade von Absorptionsprozeßen mit Wärmetransformation, wozu auch Absorptionskälteprozesse gehören, im Vergleich zum bekannten einstufigen Prozeß durch einen günstigeren Energieeinsatz und durch geschicktere Apparateausführung verbessert werden. Z.B. wird in der Patentschrift US-A-4 702 085 ein einstufiger Wärmetransformationsprozeß beschrieben, bei dem die reiche Lösung in der Reihenfolge Wärme an den Dampf aus dem Verdampfer, an die arme Lösung und an das Arbeitsmittel abgibt, um die Energierückgewinnung zu verbessern. Ferner sind die Apparate Absorber, Austreiber, Verdampfer und Kondensator in horizontaler Anordnung in einem einzigen Gehäuse untergebracht, um eine kompakte Bauweise zu erreichen. Eine weitere kompakte Bauart für eine Absorptionskälteanlage wird in der Auslegeschrift 22 19 083 beschrieben. Hierbei sind Apparate wie Absorber und Verdampfer in vertikaler Anordnung mit Außen- und Innenberieselung zusammengefaßt und durch auf der Außenseite angebrachte Drosselvorrichtungen in Segmente unterteilt, um diese bei unterschiedlichen Drucken betreiben und auf diese Weise Wärme auf unterschiedlichem Niveau übertragen zu können. Wärmezufuhr bei unterschiedlichem Druck- und Temperaturniveau hat insbesondere dann eine praktische Bedeutung, wenn die zuzuführende Wärme als sensible oder fühlbare Wärme zur Verfügung steht (z.B. über einen Warmwasserstrom). Zu diesem Zweck eignen sich auch die in der Patentschrift US-A-4 333 515 beschriebenen Schaltungen. Dort wird die fühlbare Wärme im Vorrang einer oder mehreren Verdampferstufen und anschließend einer oder mehreren Austreiberstufen bei unterschiedlichen kreislaufseitigen Drucken zuführt, so daß eine weitgehende Abkühlung des Wärmeträgers und damit eine weitgehende Nutzung der fühlbaren Wärme erreicht wird. In die 1. Verdampferstufe wird ein Teil des im Kondensator verflüssigten Arbeitsmittels eingeführt und durch Zufuhr fühlbarer Wärme verdampft. Der entstehende Dampf wird in einem Absorber absorbiert, wobei die frei werdende Absorptionswärme über einen Zwischenkreislauf der 2. Verdampferstufe zur Verdampfung eines weiteren Teils des Arbeitsmittels zugeführt wird, welches nach Absorption durch eine arme Lösung die Nutzwärme liefert.

Allen bekannten Maßnahmen zur Wärmetransformation ist es gemeinsam, daß eine hohe Temperaturanhebung bei einem ausreichend großen Wärmeverhältnis mit wenig apparativem Aufwand nicht realisiert werden kann. Es ist z. B. nicht möglich, mit den nach dem Stand der Technik verfügbaren Wärmetransformatoren eine Temperaturanhebung von 70°C auf 120°C bei einem Wärmeverhältnis von 0,3 und einer Kühlmitteltemperatur von 25°C zu erreichen.

Der Erfindung liegt die Aufgabe zugrunde, ein Verfahren und eine Vorrichtung zur Wärmetransformation in kompakter Bauweise für höhere Temperaturanhebungen oder für bessere Wärmeverhältnisse zu schaffen und dabei insbesondere durch eine neue Verfahrensschaltung sowie eine günstige Apparategestaltung und -anordnung wesentliche Verbesserungen des Wirkungsgrades bzw. der Wirtschaftlichkeit zu erreichen.

Diese Aufgabe wird erfindungsgemäß durch das Verfahren nach dem Patentanspruch 1 gelöst.

Der wesentliche Gedanke der Erfindung ist der folgende: Die Abfallwärme wird in einem Austreiber bei niedrigem Druck einer reichen Lösung 2 zugeführt, wodurch eine arme Lösung und ein Arbeitsmitteldampf entstehen, welcher in einem Kondensator bei niedrigem Druck unter Abgabe von Wärme an ein Kühlmittel kondensiert, wobei das kondensierte Arbeitsmittel nach Druckerhöhung durch Wärmetausch mit der reichen Lösung 2 erwärmt und in einen ersten Teilstrom und einen zweiten Teilstrom aufgeteilt wird, wonach der erste Teilstrom in einem Mitteldruckverdampfer durch Zufuhr von Abfallwärme verdampft und anschließend in einem Mitteldruckabsorber von einer reichen Lösung 1 absorbiert wird, während der zweite Teilstrom nach einer weiteren Druckerhöhung die im Mitteldruckabsorber entstehende Absorptionswärme aufnimmt, dabei verdampft und in einem Hochdruckabsorber von der durch Wärmetausch erwärmten armen Lösung unter Abgabe von Nutzwärme absorbiert wird. Die hierbei gebildete reiche Lösung 1 erwärmt durch Wärmetausch die auf höheren Druck gebrachte arme Lösung, fließt nach Druckabsenkung dem Mitteldruckabsorber zu, nimmt dort den im Mitteldruckverdampfer erzeugten Arbeitsmitteldampf auf und bildet die reiche Lösung 2, die in der Reihenfolge durch Wärmetausch das aus dem Kondensator ankommende Arbeitsmittelkondesat und die arme Lösung aus dem Austreiber erwärmt und nach Druckabsenkung in den Austeiber eintritt.

Im internen Kreislauf des beschriebenen Verfahrens sind drei Druckstufen zu unterscheiden: Der Austreiber und der Kondensator gehören zum Niederdruckteil; der Verdampfer und die Absorptionsseite des Mitteldruckabsorbers zum Mitteldruckteil und die Verdampferseite des Mitteldruckabsorbers und der Hochdruckabsorber für die Abgabe der Nutzwärme zum Hochdruckteil.

Das beschriebene Verfahren ermöglicht höhere Temperaturanhebungen bei guten Wärmeverhältnissen. Es ist z. B. möglich, aus einem Abfallwärmestrom bei 70°C einen Nutzwärmestrom von 120°C zu erzeugen. Das Wärmeverhältnis beträgt hierbei 0,33, wenn die Kühlmitteltemperatur 25°C beträgt.

Bei der Durchführung des Verfahrens ist es vorteilhaft, daß der erste Teilstrom *ṁ*_{*d*}₂ des Arbeitsmittelkondensates einem Mitteldruckverdampfer V zugeführt wird, dort durch Zufuhr von Abfallwärme verdampft und anschließend dem Innenraum des Rohrbündels eines Mitteldruckabsorbers MA zugeführt wird, in dem er von einer reichen Lösung 1 , *ṁ*_{*r*}₁ , unter Freisetzung von Absorptionswärme zur Verdampfung des zweiten Teilstromes *ṁ*_{*d*}₁ im Außenraum des Rohrbündels aufgenommen wird und dabei die reiche Lösung 2 , *ṁ*_{*r*}₂ , bildet.

Mit besonderem Vorteil lassen sich auch Verfahrensschritte nach den Patentansprüchen 2 bis 4 anwenden.

Für den Kreislauf des beschriebenen Verfahrens wird als Arbeitsmittel Lithiumbromid/ Wasser mit Zusätzen gegen Korrosion bevorzugt. Zur Durchführung des erfindungsgemäßen Verfahrens benutzt man eine Vorrichtung gemäß Anspruche 5. Diese Vorrichtung hat den Vorteil der kompakten Anordnung und läßt sich auf einfache und kostengünstige Art fertigen. Ferner können mit dieser Vorrichtung die verfahrensbedingten Strömungsprobleme gut gelöst werden. Der Austreiber und der Kondensator sind in einem gemeinsamen Gehäuse untergebracht, wobei die Rohre in zwei ebenfalls gemeinsamen Rohrböden enden. Vorzugsweise wird ein quadratischer Querschnitt für das Rohrbündel des Austreibers verwendet. Dies hat den Vorteil, daß die Zufuhr der armen Lösung mit Hilfe einer Düse in einfacher Art geschehen kann. Der Sumpf des Austreibers ist über eine Zwischenwand vom Kondensator getrennt, wobei zur Vermeidung von Flüssigkeitströpfchen ein Ableitblech und ein Tropfenabscheider vorgesehen sind. Über den Tropfenabscheider tritt der Arbeitsmitteldampf in den Kondensator ein und kondensiert dort.

Ebenso sind der Mitteldruckverdampfer und der Mitteldruckabsorber in einem einzigen Gehäuse mit den gleichen Merkmalen wie beim Austreiber und Kondensator untergebracht. Schließlich enthält der Hochdruckabsorber ebenso senkrecht verlaufende Rohre, die in zwei Rohrböden enden und von einem quadratischen Gehäuse umgeben sind. Somit sind alle Apparate senkrecht angeodnet. Dies ennöglicht eine kompakte Anordnung und die Einhaltung einer kleineren Grundfläche.

In weiterer Ausgestaltung der Vorrichtung ist vorgesehen, daß die Tropfenabscheidung im Mitteldruckverdampfer und Austreiber über zwei Tropfenabscheider erfolgt. Damit kann eine sichere Trennung von Dampf und Flüssigkeit erreicht werden. Unterhalb der senkrecht angeordneten Apparate werden die übrigen Wärmetauscher bzw. Pumpen angeordnet. Auf diese Weise werden Material und Grundfläche eingespart.

Vorteilhafte Gestaltungsmerkmale der Vorrichtungen zur Ausübung des Verfahrens ergeben sich auch aus den Patentansprüchen 6 bis 28.

Ein Ausführungsbeispiel der Erfindung ist in den nachfolgenden Zeichnungen dargestellt und wird im folgenden näher erläutert. Es zeigen:
- **Fig. 1**: das Verfahrensschema zur Erzeugung von Nutzwärme höherer Temperatur durch Einsatz von Abfallwärme niederer Temperatur
- **Fig. 2 und 3**: eine Vorrichtung zur Durchführung des Verfahrens.

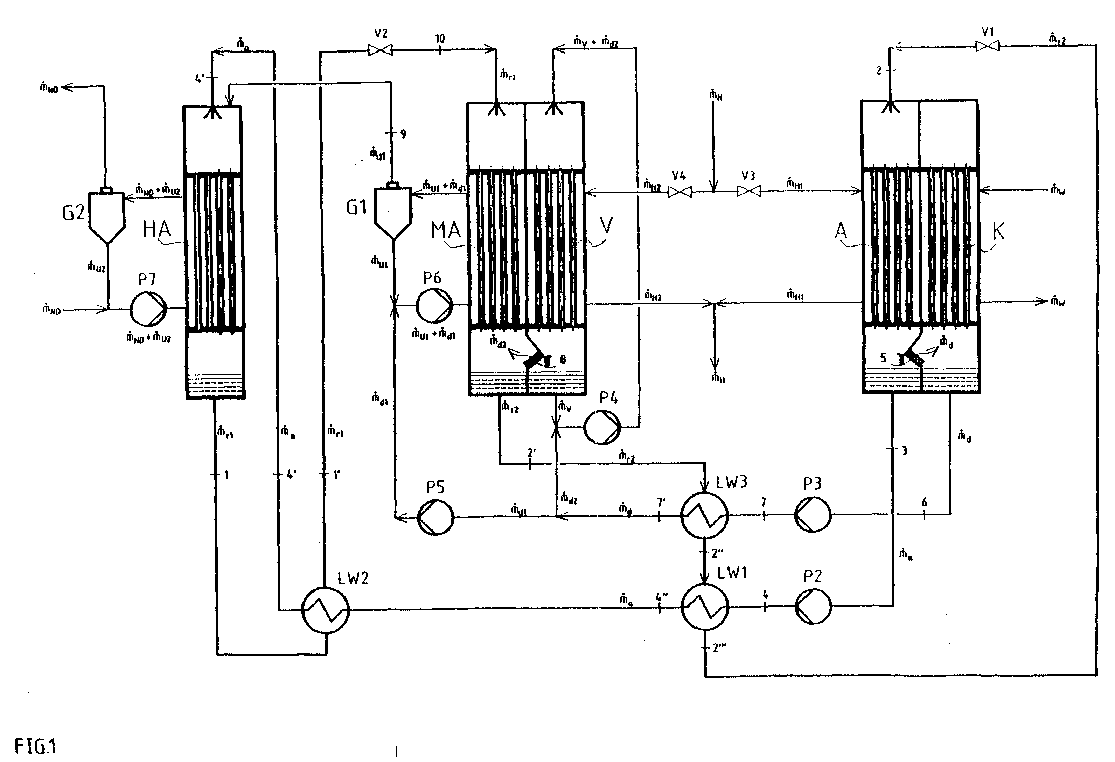

Gemäß Fig. 1 wird die Abfallwärme vom Austreiber A und vom Mitteldruckverdampfer V aufgenommen. Der Abfallwärmetrräger *ṁ*_{*H*} wird über die Ventile V3 und V4 aufgeteilt und als Einzelströme *ṁ*_{*H*}₁ und *ṁ*_{*H*}₂ dem Austreiber A bzw. dem Mitteldruckverdampfer V zugeführt. Beide Ströme kühlen sich durch Wärmeabgabe ab und werden danach wieder zu dem Massenstrom *ṁ*_{*H*} vereinigt, der dann die Anlage verläßt. Im Austreiber A und im Mitteldruckverdampfer V kann auch die latente Wärme des Wärmeträgers abgegeben werden (Kondensation).

Im Austreiber A wird die reiche Lösung 2 ,*ṁ*_{*r*}₂ , vom Zustand 2 eingeführt und auf ein Rohrbündel mit Hilfe einer geeigneten Verteilervorrichtung versprüht. Durch Wärmeaufnahme verdampft ein Teil des Lösungsmittels. Beide Ströme - Lösungsmitteldampf und flüssiges Lösungsmittel - durchströmen die senkrecht stehenden Rohre abwärts in Richtung des Sumpfes, und es entsteht die arme Lösung *ṁ*_{*a*}. Im Sumpf wird die arme Lösung vom Zustand 3 gesammelt, während der Lösungsmitteldampf über einen Tropfenabscheider in den Kondensator K eintritt (Zustand 5). Der Kondensator K wird z. B. durch Kühlwasser *ṁ*_{*W*} gekühlt. Er enthält ebenso senkrechte Rohre, die von der äußeren Seite mit Kühlwasser beaufschlagt werden. Der Dampf und das Kondensat strömen in den Rohren im Gegenstrom zueinander, wobei das Kondensat im Sumpf gesammelt wird (Zustand 6) und mit Hilfe der Pumpe P3 auf einen höheren Druck gebracht wird (Zustand 7). Nach Erwärmung im Wärmetauscher LW3 erreicht das Kondensat den Zustand 7'. Hier wird der Kondensatmassenstrom *ṁ*_{*d*} in zwei Teilströme *ṁ*_{*d*}₁ und *ṁ*_{*d*}₂ aufgeteilt.

Der erste Teilstrom *ṁ*_{*d*}₂ tritt in die Umwälzleitung des Mitteldruckverdampfers V ein und vermischt sich mit dem Umwälzstrom *ṁ*_{*V*} aus dem Sumpf. Beide Ströme werden mit Hilfe der Pumpe P4 nach oben gefördert und durch eine Verteilervorrichtung auf die senkrechten Rohre des Mitteldruckverdampfers V versprüht, der ebenso senkrechte Rohre enthält. In den Rohren verdampft ein Teil des Lösungsmittels und strömt im Gleichstrom zu dem übrigen Lösungsmittel in Richtung des Sumpfes. Am unteren Ende des Rohrbündels ist der zugeführte erste Teilstrom *ṁ*_{*d*}₂ vollständig verdampft. Im Sumpf des Mitteldruckverdampfers tritt der entstandene Dampf vom Zustand 8 über einen Tropfenabscheider in den Mitteldruckabsorber ein, während das restliche Lösungsmittel *ṁ*_{*V*} gemeinsam mit dem eintretenden Massenstrom *ṁ*_{*d*}₂ umgewälzt wird. Im Mitteldruckverdampfer wird praktisch der erste Teilstrom des Kondensats *ṁ*_{*d*}₂ in die dampfförmige Phase überführt. Der über einen Tropfenabscheider in den Mitteldruckabsorber MA übertretende dampfförmige erste Teilstrom *ṁ*_{*d*}₂ vom Zustand 8 wird zur Erzeugung von Wärme von der reichen Lösung 1, *ṁ*_{*r*}₁ , vom Zustand 10 absorbiert und vollständig niedergeschlagen. Dazu wird die reiche Lösung 1, *m*_{*r*}₁ , auf das Rohrbündel des Mitteldruckabsorbers gleichmäßig verteilt. Im Gegenstrom hierzu strömt der Dampf des ersten Teilstromes *ṁ*_{*d*}₂ von unten nach oben durch die Rohre und wird vollständig absorbiert. Gleichzeitig tritt der zweite Teilstrom des Kondensats *ṁ*_{*d*}₁ nach Druckerhöhung durch die Pumpe P5 hinter dem Wärmetauscher LW3 gemeinsam mit dem Umwälzstrom *ṁ*_{*U*}₁ über die Umwälzpumpe P6 in den äußeren Raum des Rohrbündels des Mitteldruckabsorbers MA ein und nimmt dort die Absorptionswärme auf. Die Strömung erfolgt im Außeuraum des Rohrbündels von unten nach oben vorteilhaft über mehrere Umlenkbleche. Am Austritt aus dem Rohrbündel ist der zweite Teilstrom *ṁ*_{*d*}₁ verdampft, und es liegt eine zweiphasige Strömung vor. Im nachgeschalteten mechanischen Dampfabscheider G1 wird dann der dampfförmige zweite Teilstrom *ṁ*_{*d*}₁ von der Flüssigkeit getrennt. Der nicht verdampfte Umwälzstrom *ṁ*_{*U*}₁ gelangt wieder in die Umwälzpumpe P6, während der dampffönnige zweite Teilstrom *ṁ*_{*d*}₁ in den Hochdruckabsorber HA an der obersten Stelle eingeführt wird (Zustand 9). Gleichzeitig gelangt die arme Lösung *ṁ*_{*a*} vom Zustand 4' in den Hochdruckabsorber HA und wird auf sein senkrecht angeordnetes Rohrbündel gleichmäßig verteilt. In den Rohren nimmt die arme Lösung *ṁ*_{*a*} den eingeführten dampfförmigen zweiten Teilstrom *ṁ*_{*d*}₁ auf und gibt dabei die Absorptionswärme ab. Dies geschieht in den Rohren im Gleichstrom in Richtung des Sumpfes. Dort bildet sich am Austritt die reiche Lösung 1, *ṁ*_{*r*}₁ , vom Zustand 1 in flüssiger Form. Im äußeren Raum des Rohrbündels umströmen der Umwälzstrom *ṁ*_{*U*}₂ und der eingeführte Speisewasserstrom *ṁ*_{*ND*} die Rohre. Dabei verdampft der Speisewasserstrom *ṁ*_{*ND*} durch Aufnahme der Absorptionswärme, so daß am Austritt aus dem Rohrbündel eine Zweiphasenströmung vorliegt. Im Dampfabscheider G2 wird dann der verdampfte Speisewasserstrom *ṁ*_{*ND*} von der Flüssigkeit getrennt und kann nun als Nutzdampf (z. B. in einem Dampfnetz) verwendet werden. Der Massenstrom der reichen Lösung 1, *ṁ*_{*r*}₁ , vom Zustand 1 am Austritt des Hochdruckabsorbers verfügt über eine hohe Temperatur und heizt im Wärmetauscher LW2 die ankommende arme Lösung *ṁ*_{*a*} vom Zustand 4" auf den Zustand 4' auf. Danach erfährt die reiche Lösung 1, *ṁ*_{*r*}₁, vom Zustand 1' im Drosselventil V2 eine Entspannung auf den Innendruck des Mitteldruckabsorbers MA (Zustand 10).

Der Absorptionsvorgang im Mitteldruckabsorber MA beginnt dann von neuem, und es entsteht durch Aufnahme des ersten dampfförmigen Teilstromes *ṁ*_{*d*}₂ die noch weiter angereicherte Lösung 2, *ṁ*_{*r*}₂ , (Zustand 2'). Die reiche Lösung 2, *ṁ* _{*r*}₂ , gibt dann im Wärmetauscher LW3 Wärme an das ankommende Arbeitsmittelkondensat *ṁ*_{*d*} vom Zustand 7 ab. Nach Abkühlung auf den Zustand 2" erfolgt eine weitere Wärmeabgabe an die arme Lösung *ṁ*_{*a*} vom Zustand 4, so daß der Zustand 2"' entsteht. Danach gelangt die reiche Lösung 2, *ṁ*_{*r*}₂ , nach Entspannung im Drosselventil V1 (Zustand 2) in den Austreiber A. Hier verdampft der erforderliche Lösungsmittelstrom *ṁ*_{*d*}(Zustand 5) durch Zufuhr von Abfallwärme über den Wärmeträger *ṁ*_{*H*}₁. Der Dampf gelangt dann über einen Tropfenabscheider in den Kondensator, während die arme Lösung *ṁ*_{*a*} vom Sumpf abgezogen wird (Zustand 3) und über die Pumpe P2 durch den Wärmetauscher LW1 zwecks Aufheizung gepumpt wird (Zustand 4). Nach der Aufheizung (Zustand 4") gelangt die arme Lösung in den Wärmetauscher LW2 und wird nach Erwärmung (Zustand 4') in den Hochdruckabsorber HA geschickt. Damit ist der Kreislauf geschlossen.

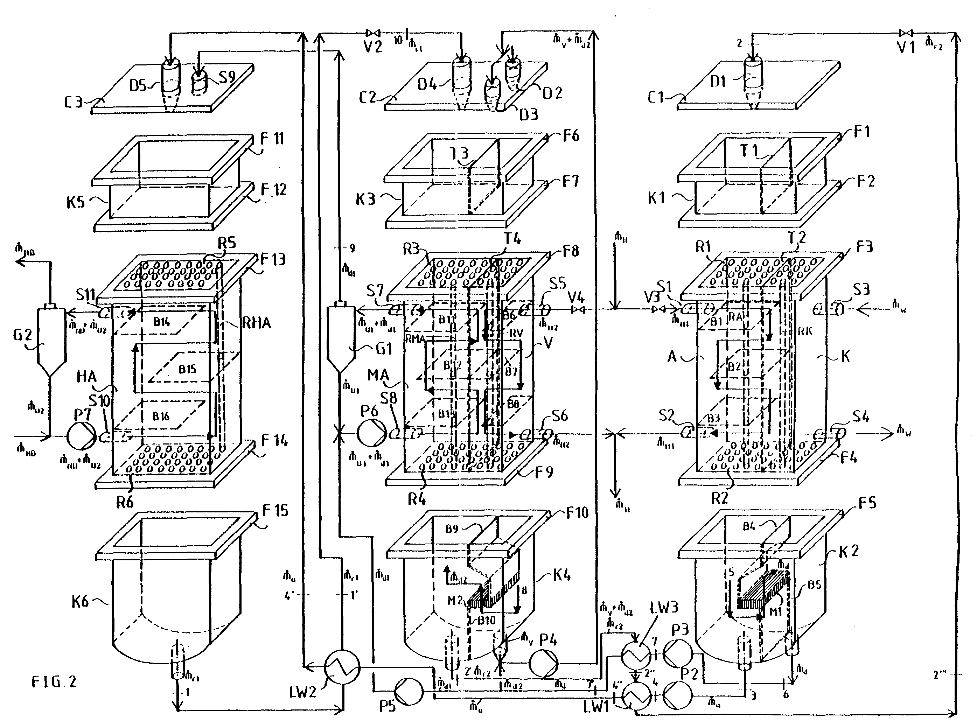

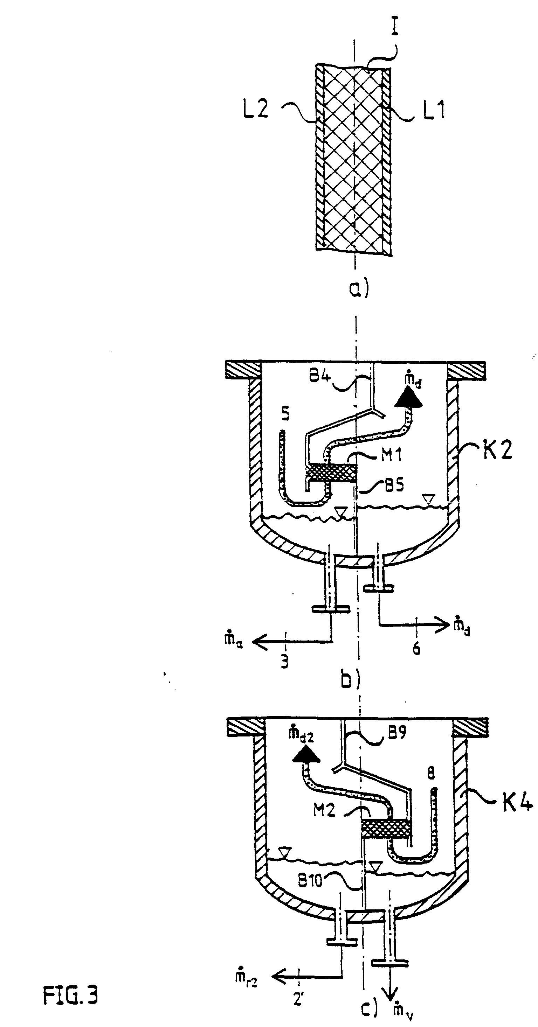

Fig. 2 und Fig. 3 zeigen die erfindungsgemäße Vorrichtung zur Durchführung des Verfahrens.

Die reiche Lösung 2, *ṁ*_{*r*}₂ , wird im Drosselventil V1 entspannt und über die Verteilerdüse D1, die mit dem Deckel C1 verbunden ist, in die gemeinsame Eintrittskammer K1 des Austreibers A und des Kondensators K eingeführt. Die Eintrittskammer enthält eine Trennwand T1, die den Verteilerraum im Austreiber und den Dampfraum im Kondensator voneinander trennt. Die Düse Dl verteilt die reiche Lösung 2, *ṁ*_{*r*}_{2,} gleichmäßig auf das Rohrbündel des Austreibers A, so daß die Flüssigkeit innerhalb der Rohre als dünner Rieselfilm nach unten fließen kann. Die Rohre RA und RK des Austreibers und des Kondensators werden von zwei gemeinsamen, rechteckigen Rohrböden R1 und R2 begrenzt. Die äußeren Räume der Rohrbündel sind durch die Trennwand T2 voneinander getrennt, die gemäß Fig. 3a aus zwei Blechen L1, L2 und der dazwischen angebrachten Isolierung I besteht. Die Isolierung I verhindert die Wärmeübertragung zwischen dem Austreiber und dem Kondensator.

Der Austreiber hat zwecks einer gleichmäßigen Flüssigkeitsverteilung vorzugsweise einen quadratischen Querschnitt, der Kondensator einen rechteckigen Querschnitt. Die Beheizung des Austreibers erfolgt mit dem Teilstrom *ṁ*_{*H*}₁ des Abfallwärmeträgers *ṁ*_{*H*}· Zur Wärmeabgabe tritt der Teilstrom *ṁ*_{*H*}₁ über den Stutzen S1 oben in den Außenraum des Rohrbündels ein, wird über mehrere Umlenkbleche B1, B2, B3 im Kreuzstrom zu den Rieselfilmen in den Rohren RK geführt, dabei abgekühlt oder teilweise bzw. ganz kondensiert. Nach der Wärmeabgabe tritt *ṁ*_{*H*}₁ unten aus dem Stutzen S2 aus. Durch den über *ṁ*_{*H*}₁ zugeführten Wärmestrom verdampft aus der reichen Lösung 2, *ṁ*_{*r*}_{2,} der Teil *ṁ*_{*d*} der in den Rohren RA einen Dampfkern bildet und gemeinsam mit den Rieselfilmen nach unten strömt. Durch Austreiben des Lösungsmittels *ṁ*_{*d*} (dampfförmig) entsteht am unteren Ende des Rohrbündels die arme Lösung *ṁ*_{*a*}_{,} (flüssig). Die arme Lösung wird über das Ableitblech B4 im Sumpf der gemeinsamen Austrittskammer K2 gesammelt und unten (Zustand 3) abgezogen. Der Dampf *ṁ*_{*d*}(Zustand 5) gelangt durch den Tropfabscheider M1 in den kondensatseitigen Sumpf oberhalb des Flüssigkeitsstandes und strömt zur Kondensation in Richtung der Kondensatorrohre RK nach oben. Der Tropfenabscheider M1 wird vom Ableitblech B4 und von der Trennwand B5 gehalten, die ihrerseits mit dem Gehäuse der Austrittskammer K2 verbunden sind. Die Trennwand B5 trennt den Sumpf des Austreibers von dem des Kondensators. Zur Veranschaulichung sind die Teile und die Massenströme in Fig. 3b im Längsschnitt dargestellt. Diese Anordnung ermöglicht, daß der Dampf *ṁ*_{*d*} tropfenfrei und ungehindert in den Kondensator eintreten und nach oben strömen kann. In den Rohren RK kondensiert der Dampf. Das Kondensat bildet einen Rieselfilm, strömt im Gegenstrom zum Dampf nach unten und sammelt sich schließlich im Sumpf von K2, aus dem es abgezogen wird (Zustand 6). Die Kondensation erfolgt hierbei vollständig. nichtkondensierbare Gase werden (z. B. durch eine Vakuumpumpe) über den Deckel C1 abge-zogen (in Fig. 2 nicht eingezeichnet). Zur Kondensation dient das Kühlwasser *ṁ*_{*w*}, das über den Stutzen S3 in den Außenraum des Kondensatorrohrbündels eintritt, nach unten fließt, sich dabei erwärmt und den Kondensator über den Stutzen S4 verläßt.

Der Deckel C1, die Eintrittskammer K1, das gemeinsame Gehäuse des Austreibers A und des Kondensators K werden durch die Flansche F1, F2, F3, F4 und F5 miteinander verbunden. Zur Abdichtung nach außen werden, der Flanschform entsprechend, Dichtungen verwendet.

Nach Austritt aus dem Kondensator K wird das Kondensat des Lösungsmittels *ṁ*_{*d*} nach Druckerhöhung durch die Pumpe P3 (Zustand 7) im Lösungswärmetauscher LW3 auf eine höhere Temperatur gebracht (Zustand 7') und anschließend in die Teilströme *ṁ*_{*d*}₁ und *ṁ*_{*d*}₂ aufgeteilt. Der erste Teilstrom *ṁ*_{*d*}₂ wird gemeinsam mit dem umlaufenden Umwälzstrom *ṁ*_{*V*} von der Pumpe P4 zum Kopf des Mitteldruckverdampfers V gefördert und durch die am Deckel C2 befindlichen Düsen D2 und D3 über die gemeinsame Eintrittskammer K3 auf dessen Rohrbündel gleichmäßig verteilt. In den Verdampferrohren RV bilden sich Rieselfilme, die nach unten strömen und durch Wärmezufuhr teilweise verdampfen. Die Wärme wird durch den Teilstrom *ṁ*_{*H*}₂ des Abfallwärmeträgers *ṁ*_{*H*} zugeführt. Dazu durchströmt *ṁ*_{*H*}₂ nach Eintritt über den Stutzen S5 den Außenraum des Rohrbündels über mehrere Umlenkbleche B6, B7, B8 im Kreuzstrom zu den Rieselfilmen in den Rohren RV. Nach Wärmeabgabe verläßt *ṁ*_{*H*}₂ den Verdampfer über den Stutzen S6 und wird gemeinsam mit *ṁ*_{*H*}₁ aus dem Austreiber abgeführt. Die Aufteilung des Abfallwärmeträgers *ṁ*_{*H*} in *ṁ*_{*H*}₁ und in *ṁ*_{*H*}₂ für den Austreiber und für den Mitteldruckverdampfer vollzieht sich über die Regelventile V3 und V4.

Dem Mitteldruckverdampfer (V) wird soviel Wärme zugeführt, bis der eintretende erste Teilstrrom des Arbeitsmittelkondensats *ṁ*_{*d*}₂ am unteren Ende des Rohrbündels vollständig verdampft ist. Der Dampf bildet sich im Rohrkern und strömt gemeinsam mit dem Umwälzstrom *ṁ*_{*V*} nach unten in Richtung des Sumpfes, der in der Austrittskammer K4 untergebracht ist. Zur Aufrechterhaltung einer ausreichenden Rohrbedeckung dient der Umwälzstrom *ṁ*_{*V*}, der über das Ableitblech B9 in den Sumpf des Mitteldruckverdampfers gelangt und anschließend gemeinsam mit *ṁ*_{*d*}₂ (flüssig) durch die Pumpe P4 umgewälzt wird. Der im Verdampfer erzeugte erste dampfförmige Teilstrom *ṁ*_{*d*}₂ durchströmt den Tropfenabscheider M2 und strömt oberhalb des Sumpfes des Mitteldruckabsorbers in Richtung der Rohre RMA zwecks Absorption nach oben. Der Tropfenabscheider M2 wird vom Ableitblech B9 und von der Trennwand B10 gehalten. Fig. 3c zeigt im Längsschnitt die einzelnen Ströme und Teile der Austrittskammer K4. Zur Absorption des Dampfes *ṁ*_{*d*}₂ wird die reiche Lösung 2, *ṁ*_{*r*}₂, durch die Düse D4, die am Deckel C2 angeordnet ist, aufgegeben und über die gemeinsame Eintrittskammer K3 auf die Rohre RMA gleichmäßig verteilt. Es bilden sich Rieselfilme, die nach unten fließen, den im Gegenstrom ankommenden Dampf *ṁ* _{*d*}₂ absorbieren und dabei die Absorptionswärme freisetzen, die im Außenraum des Rohrbündels zur Erzeugung des Hochdruckdampfes aus dem zweiten Teilstrom *ṁ*_{*d*}₁ des Arbeitsmittelkondensates verwendet wird. Nach der Absorption entsteht die reiche Lösung 2, *ṁ*_{*r*}₂, die aus dem Sumpf von K4 (Zustand 2') abgezogen wird. Die reiche Lösung 2, *ṁ*_{*r*}₂, gibt anschließend in den Wärmetauschern LW3 und LW1 Wärme an das Arbeitsmittelkondensat *ṁ*_{*d*} und an die arme Lösung *ṁ*_{*a*} ab und kühlt sich in der Reihenfolge auf die Zustände 2" und 2"' ab.Sie tritt dann nach Drosselung im Ventil V1 in den Austreiber A ein, und die beschriebenen Vorgänge laufen wieder ab.

Zur Wärmeaufnahme im Mitteldruckabsorber MA wird der zweite Teilstrom *ṁ*_{*d*}₁ gemeinsam mit dem Umwälzstrom *ṁ*_{*U*}₁ durch die Pumpe P6 in den Außenraum des Rohrbündels (Hochdruckverdampfer) gefördert und durch mehrere Umlenkbleche B11, B12, B13 im Kreuzstrom zur Absorptionsseite mehrfach umgelenkt. Durch Aufnahme der Absorptionswärme verdampft der zugeführte zweite Teilstrom *ṁ*_{*d*}₁ vollständig, so daß sich im Außenraum des Rohrbündels eine Zweiphasenströmung ausbildet. Das zweiphasige Gemisch verläßt den Mitteldruckabsorber durch den Stutzen S7 und wird im Dampfabscheider G1 in Dampf und Flüssigkeit getrennt. Der dampfförmige zweite Teilstrom (Zustand 9) *ṁ*_{*d*}₁ gelangt in den Hochdruckabsorber HA, während der flüssige Anteil *ṁ*_{*U*}₁ gemeinsam mit dem flüssigen zweiten Teilstrom *ṁ*_{*d*}₁ durch die Pumpe P6 und den Stutzen S8 in den Außentaum des Rohrbündels geführt wird.

Der Mitteldruckabsorber MA und der Mitteldruckverdampfer V sind wie der Austreiber und der Kondensator in einem gemeinsamen Gehäuse untergebracht. Sie besitzen den Deckel C2, die Eintrittskammer K3 mit der Trennwand T2, die gemeinsamen Rohrböden R3 und R4, die Trennwand T4, die die Außenräume der Rohrbündel voneinander trennt und eine Isolierschicht enthält und schließlich die Austrittskammer K4. Die Verbindung der Teile erfolgt über die Flansche F6, F7, F8, F9 und F10 mit dazu geeigneten Dichtungen. Der Mitteldruckabsorber hat vorzugsweise einen quadratischen, der Mitteldruckverdampfer einen rechteckigen Querschnitt.

Zur Erzeugung von Nutzwärme durch Absorption werden die arme Lösung *ṁ*_{*a*} und der Hochdruckdampf *ṁ*_{*d*}₁ im Hochdruckabsorber HA zusammengebracht. Die arme Lösung *ṁ*_{*a*} wird nach Druckerhöhung durch die Pumpe P2 (Zustand 4) zunächst im Wärmetauscher LW1 (Zustand 4") und anschließend im Wärmetauscher LW2 erwärmt. (Zustand 4') Sie wird durch die am Deckel C3 befindliche Düse über die Eintrittskammer K5 auf die Rohre RHA des Hochdruckabsorbers HA verteilt, so daß nach unten fließende Rieselfilme entstehen. Parallel hierzu wird der Hochdruckdampf *ṁ*_{*d*}₁ über S9 eingeführt. Der Hochdruckdampf *ṁ*_{*d*}₁ als Dampfkern und die arme Lösung *ṁ*_{*a*} als Rieselfilm strömen in den Rohren RHA nach unten und setzten durch Aufnahme der Dampfphase durch die Flüssigkeit die Absorptionswärme bei höherer Temperatur frei, die vom Nutzwärmeträger im Außenraum des Rohrbündels als Nutzwärme aufgenommen wird.

Am unteren Ende des Rohrbündels ist die Absorption beendet, und es entsteht die reiche Lösung 1, *ṁ*_{*r*}₁ , die nach Abzug aus dem Sumpf der Austrittskammer K6 (Zustand 1) im Wärmetauscher LW2 Wärme an die ankommende arme Lösung abgibt. Nach Abkühlung im Wärmetauscher LW2 (Zustand 1') und Entspannung im Drosselventil V2 (Zustand 10) gelangt die reiche Lösung 1, *ṁ*_{*r*}₁, in den Mitteldruckabsorber MA. Damit ist der Kreislauf geschlossen.

Die beschriebene Vorrichtung weist besondere Vorteile auf, die die Wirtschaftlichkeit der Wärmetrausformation entscheidend verbessern. Die Fertigung des Austreibers und des Kondensators und in ähnlicher Weise die Fertigung des Mitteldruckabsorbers und des Mitteldruckverdampfers, kann in einem Arbeitsgang geschehen. Das Bohren und das Berohren können für jeweils zwei Apparate in einem Arbeitsschritt durchgeführt werden. Durch Integration von zwei Apparaten in ein Gehäuse wird in beachtlichem Umfang Material, Gewicht und Arbeitsaufwand gespart. Schließlich können die Apparate und die Komponenten kompakt angeordnet werden, wodurch die Montage vereinfacht, der Aufwand für Rohrleitungen reduziert und der Transport erleichtert wird.

Aus den Vorteilen resultiert eine kürzere Amortisationszeit, die die Anwendung der beschriebenen Wärmetransformation für viele Prozesse attraktiv macht.

## Patentansprüche

1. Verfahren zur Erzeugung von Nutzwärme höherer Temperatur durch Einsatz von Abfallwärme niedrigerer Temperatur, wobei ein Arbeitsgemisch aus leichtsiedendem Arbeitsmittel und schwersiedendem Lösungsmittel in einem geschlossenen Kreislauf, bestehend aus einem Hochdruckteil mit Hochdruckabsorber (HA), einem Mitteldruckteil mit Rohrbündel-Mitteldruckabsorber (MA) und einem Mitteldruckverdampfer (V), und einem Niederdruckteil mit Austreiber (A) und Kondensator (K), mit folgenden Schritten geführt wird:
a) die Abfallwärme wird einer an Arbeitsmittel reichen Lösung (*ṁ*_{*r*}₂) im Austreiber (A) zugeführt, wodurch eine arme Lösung (*ṁ*_{*a*}) sowie ein Arbeitsmitteldampf (*ṁ*_{*d*}) erzeugt wird;
b) der Arbeitsmitteldampf (*ṁ*_{*d*}) wird im Kondensator (K) unter Abgabe von Wärme an ein Kühlmittel kondensiert;
c) das kondensierte Arbeitsmittel (*ṁ*_{*d*}) wird nach Druckerhöhung durch eine Pumpe (P3) durch Wärmetausch mit der reichen Lösung (*ṁ*_{*r*}₂) in einem Wärmetauscher (LW3) erwärmt und in einen ersten Teilstrom (*ṁ*_{*d*}₂) und einen zweiten Teilstrom (*ṁ*_{*d*}₁) aufgeteilt;
d) der erste Teilstrom (*ṁ*_{*d*}₂) wird im Mitteldruckverdampfer (V) durch Zufuhr von Abfallwärme verdampft und danach in den Rohren des Mitteldruckabsorber (MA) von einer reichen Lösung (*ṁ*_{*r*}₁) unter Abgabe von Absorptionswärme absorbiert;
e) der zweite Teilstrom (*ṁ*_{*d*}₁) wird nach weiterer Druckerhöhung durch eine Pumpe (P5) im Außenraum des Rohrbündels des Mitteldruckabsorber (MA) durch Aufnahme der Absorptionswärme aus Schritt d) verdampft;
f) der verdampfte zweite Teilstrom (*ṁ*_{*d*}₁) wird im Hochdruckabsorber (HA) von der an Arbeitsmittel armen Lösung (*ṁ*_{*a*}) unter Abgabe der Nutzwärme absorbiert, wodurch eine erste reiche Lösung (*ṁ*_{*r*}₁) gebildet wird;
g) die erste reiche Lösung (*ṁ*_{*r*}₁) wird nach Wärmetausch mit der dem Hochdruckabsorber (HA) zur Absorption zugeführten armen Lösung *ṁ*_{*a*} im Wärmetauscher (LW2) dem Mitteldruckabsorber (MA) zur Absorption nach Schritt d) zugeführt, wodurch eine zweite reiche Lösung (*ṁ*_{*r*}₂) gebildet wird; und
h) die zweite reiche Lösung (*ṁ*_{*r*}₂) wird nach Wärmetausch mit dem kondensierten Arbeitsmittel (*ṁ*_{*d*}) gemäß Schritt c) im Wärmetauscher (LW3) und anschließendem Wärmetausch mit der aus der vom Austeiber kommenden armen Lösung (*ṁ*_{*a*}) im Wärmetauscher (LW1) dem Austreiber (A) zugeführt.

2. Verfahren nach Anspruch 1, dadurch gekennzeichnet, daß der zweite flüssige Teilstrom (*ṁ*_{*d*}₁) des Arbeitsmittels vor dem Eintritt in den Außenraum des Rohrbündels des Mitteldruckabsorbers (MA) zur Aufnahme der Absorptionswärme mit einem Umwälzstrom 1 (*ṁ*_{*U*}₁) vermischt wird und mit diesem über die Umwälzpumpe (P6) zunächst zur Aufnahme der Absorptionswärme durch den Außenraum des Mitteldruckabsorbers (MA) und anschließend durch einen Dampfabscheider (G1) geführt wird und diesen dampfförmig verläßt.

3. Verfahren nach Anspruch 1, dadurch gekennzeichnet, daß der erste flüssige Teilstrom des Arbeitsmittels (*ṁ*_{*d*}₂) vor der Verdampfung im Mitteldruckverdampfer (V) mit einem Verdampferumwälzstrom (*ṁ*_{*V*}) vermischt und anschließend durch die Umwälzpumpe (P4) durch die Verdampferrohre umgewälzt wird und dabei durch Wärmeaufnahme aus dem Abfallwärmeträger (*ṁ*_{*H*}₂) vollständig verdampft.

4. Verfahren nach Anspruch 1, dadurch gekennzeichnet, daß ein Nutzwärmeträger (*ṁ*_{*ND*}) vor dem Eintritt in den Hochdruckabsorber (HA) zur Aufnahme der Nutzwärme mit einem Umwälzstrom 2 (*ṁ*_{*U*}₂) vermischt wird und mit diesem über eine Umwälzpumpe (P7) zunächst zur Aufnahme der Nutzwärme durch den Außenraum des Rohrbündels des Hochdruckabsorbers (HA) und anschließend durch einen Dampfabscheider (G2) geführt wird und diesen dampfförmig verläßt.

5. Vorrichtung zur Durchführung des Verfahrens nach Anspruch 1, mit einem Hochdruckteil mit Hochdruckverdampfer und Hochdruckabsorber (HA), einem Mitteldruckteil mit Mitteldruckabsorber (MA) und Mitteldruckverdampfer (V), einem Niederdruckteil mit Austreiber (A) und Kondensator (K), einer Leitung für die arme Lösung (*ṁ*_{*a*}), die den Austreiber (A) mit dem Hochdruckabsorber (HA) verbindet und in der ein erster und ein zweiter Wärmetauscher (LW1 und LW2) zum Wärmetausch mit den reichen Lösungen (*ṁ*_{*r*}₁ und *ṁ*_{*r*}₂ ) angeordnet sind,einer Leitung für kondensiertes Arbeitsmittel (*ṁ*_{*d*}, Zustand 6) , die vom Kondensator (K) über eine erste Pumpe (P3) zu einer Abzweigung führt, die über eine erste Teilleitung mit dem Mitteldruckverdampfer (V) und über eine zweite Teilleitung, in der eine weitere Pumpe (P5) angeordnet ist, mit dem Hochdruckverdampfer verbunden ist und von dort zum Hochdruckabsorber (HA) führt, sowie einer Leitung für die erste reiche Lösung (*ṁ*_{*r*}₁), die den Hochdruckabsorber (HA) über den zweiten Wärmetauscher (LW2), den Mitteldruckabsorber (MA) und den ersten Wärmetauscher (LW1) mit dem Austreiber (A) verbindet, dadurch gekennzeichnet, daß der Mitteldruckabsorber (MA) gemeinsam mit dem Hochdruckverdampfer als Rohrbündel-Wärmetauscher ausgebildet ist, mit dessen Rohrinnenraum, der den Mitteldruckabsorber bildet, der Mitteldruckverdampfer (V) sowie die Leitung für die erste reiche Lösung (*ṁ*_{*r*}₁) und mit dessen Rohraußenraum , der den Hochdruckverdampfer bildet, die zweite Teilleitung für kondensiertes Arbeitsmittel (*ṁ*_{*d*}₁) verbunden ist und daß in der Leitung für kondensiertes Arbeitsmittel (*ṁ*_{*d*} , Zustand 7) zwischen der ersten Pumpe (P3) und der Abzweigung ein dritter Wärmetauscher (LW3) zum Wärmetausch mit der Leitung für die zweite reiche Lösung (*ṁ*_{*r*}₂) an einer Stelle zwischen dem Mitteldruckabsorber (MA) und dem ersten Wärmetauscher (LW1) angeordnet ist.

6. Vorrichtung nach Anspruch 5, dadurch gekennzeichnet, daß der Austreiber (A) und der Kondensator (K) vertikal angeordnet in einem prismatischen Gehäuse mit rechteckigem Querschnitt untergebracht und deren Rohrbündel durch eine Trennwand (T2), die eine Isolierung enthält, voneinander getrennt sind.

7. Vorrichtung nach Anspruch 6, dadurch gekennzeichnet, daß der Austreiber (A) und der Kondensator (K) eine gemeinsame Eintrittskammer (K1) mit rechteckigem Querschnitt und zwei angrenzenden rechteckigen Flanschen (F1 und F2) sowie einer Trennwand (T1) besitzen, die den Dampfraum des Kondensators von dem Raum der zufließenden armen Lösung des Austreibers trennt.

8. Vorrichtung nach den Ansprüchen 5 und 6, dadurch gekennzeichnet, daß der Austreiber (A) und der Kondensator (K) eine gemeinsame Austrittskammer (K2) mit rechteckigem Querschnitt und einem aufgesetzten Flansch (F5) besitzen, die die Sümpfe für die arme Lösung (*ṁ*_{*a*}) und das verflüssigte Arbeitsmittel (*ṁ*_{*d*}), welches durch Kondensation des im Austreiber verdampften Arbeitsmitteldampfes entsteht, durch ein Ableitblech (B4) für die arme Lösung, einen Tropfenabscheider (M1) zum Durchtritt des Arbeitsmitteldampfes und eine Trennwand (B5) voneinander trennt.

9. Vorrichtung nach Anspruch 6, dadurch gekennzeichnet, daß im Außenraum des Rohrbündels des Austreibers (A) horizontale Umlenkbleche (B1, B2, B3) zur Führung eines Abfallwärmeträgers (*ṁ*_{*H*}₁) vorgesehen sind.

10. Vorrichtung nach Anspruch 9, dadurch gekennzeichnet, daß die Verteilung der zweiten reichen Lösung (*ṁ*_{*r*}₂) auf das Rohrbündel des Austreibers (A) durch eine Düse (D1) erfolgt.

11. Vorrichtung nach Anspruch 6, dadurch gekennzeichnet, daß das Rohrbündel des Austreibers (A) vorzugsweise einen quadratischen Querschnitt besitzt.

12. Vorrichtung nach Anspruch 6 und 10, dadurch gekennzeichnet, daß der Austreiber (A) und der Kondensator (A) einen gemeinsamen Deckel (C1) mit rechteckigem Querschnitt besitzen, in den die Düse (D1) zur Einführung der zweiten reichen Lösung (*ṁ*_{*r*}₂) eingelassen ist.

13. Vorrichtung nach Anspruch 5, dadurch gekennzeichnet, daß der Mitteldruckverdampfer (V) und der Mitteldruckabsorber (MA) vertikal angeordnet in einem prismatischen Gehäuse mit rechteckigem Querschnitt untergebracht und dessen Rohrbündel durch eine Trennwand (T4), die eine Isolierung enthält, voneinander getrennt sind.

14. Vorrichtung nach Anspruch 13, dadurch gekennzeichnet, daß der Mitteldruckverdampfer (V) und der Mitteldruckabsorber (MA) eine gemeinsame Eintrittskammer (K3) mit rechteckigem Querschnitt und zwei angrenzenden, rechteckigen Flanschen (F6 und F7) sowie einer Trennwand (T3) besitzen, die den Verteilerraum des Verdampfers von dem des Mitteldruckabsorbers trennt.

15. Vorrichtung nach den Ansprüchen 5 und 13, dadurch gekennzeichnet, daß der Mitteldruckverdampfer (V) und der Mitteldruckabsorber (MA) eine gemeinsame Austrittskammer (K4) mit rechteckigem Querschnitt und einem aufgesetzten Flansch (F10) besitzen, die Sümpfe für die zweite reiche Lösung (*ṁ*_{*r*}₂) und den Umwälzstrom (*ṁ*_{*V*}) , welcher in flüssiger Form gemeinsam mit dem ersten Teilstrom (*ṁ*_{*d*}₂) über die Pumpe (P4) zu Verteilerdüsen (D2) und (D3) gefördert wird, durch ein Ableitblech (B9) für den Umwälzstrom (*ṁ*_{*V*}) einen Tropfenabscheider (M2) zum Durchtritt des verdampften, ersten Teilstromes (*ṁ*_{*d*}₂), welcher durch Zufuhr von Abfallwärme über einen Abfallwärmeträger (*ṁ*_{*H*}₂) entsteht, und eine Trennwand (B10) voneinander trennt

16. Vorrichtung nach Anspruch 13, dadurch gekennzeichnet, daß im Außenraum des Rohrbündels des Verdampfers (V) horizontale Umlenkbleche (B6, B7, B8) zur Führung eines Abfallwärmeträgers (*ṁ*_{*H*}₂) vorgesehen sind.

17. Vorrichtung nach Anspruch 13, dadurch gekennzeichnet, daß im Außenraum des Rohrbündels des Mitteldruckabsorbers (MA) horizontale Umlenkbleche (B11, B12, B13) zur Führung des Gemisches (*ṁ*_{*U*}₁ + *ṁ*_{*d*}₁) vorgesehen sind, das bei der Umströmung des Rohrbündels genau um den Anteil (*ṁ*_{*d*}₁) verdampft.

18. Vorrichtung nach Anspruch 5, dadurch gekennzeichnet, daß die Verteilung der Flüssigkeit (*ṁ*_{*V*} + *ṁ*_{*d*}₂) im Mitteldruckverdampfer (V) durch zwei Düsen (D2 und D3) erfolgt.

19. Vorrichtung nach Anspruch 5, dadurch gekennzeichnet, daß die Verteilung der ersten reichen Lösung (*ṁ*_{*r*}₁) im Mitteldruckabsorber (MA) durch eine Düse (D4) erfolgt.

20. Vorrichtung nach Anspruch 13, dadurch gekennzeichnet, daß der Mitteldruckverdampfer (V) und der Mitteldruckabsorber (MA) einen gemeinsamen Deckel (C2) besitzen, in den die Düsen (D2, D3 und D4) eingelassen sind.

21. Vorrichtung nach Anspruch 13, dadurch gekennzeichnet, daß das Rohrbündel des Mitteldruckabsorbers (MA) vorzugsweise einen quadratischen Querschnitt besitzt.

22. Vorrichtung nach Anspruch 13, dadurch gekennzeichnet, daß der Mitteldruckverdampfer (V) einen rechteckigen Querschnitt mit einem Verhältnis der Kantenlängen von zwei zu eins besitzt.

23. Vorrichtung nach Anspruch 5, dadurch gekennzeichnet, daß der Hochdruckabsorber (HA) in einem prismatischen Gehäuse mit quadratischem Querschnitt untergebracht ist.

24. Vorrichtung nach Anspruch 23, dadurch gekennzeichnet, daß der Hochdruckabsorber (HA) eine Eintrittskammer (K5) mit quadratischem Querschnitt und zwei angrenzenden Flanschen (F11) und (F12) besitzt.

25. Vorrichtung nach den Ansprüchen 5 und 23, dadurch gekennzeichnet, daß der Hochdruckabsorber (HA) zur Aufnahme der ersten reichen Lösung (*ṁ*_{*r*}₁) eine Austrittskammer K6 mit quadratischem Querschnitt und einem aufgesetzten Flansch (F15) besitzt.

26. Vorrichtung nach Anspruch 23, dadurch gekennzeichnet, daß im Außenraum des Rohrbündels des Hochdruckabsorbers (HA) Umlenkbleche (B14, B15, B16) zur Führung des Gemisches (*ṁ*_{*U*}₂ + *ṁ*_{*DN*}) vorgesehen sind, das bei der Umströmung des Rohrbündels genau um den Anteil (*ṁ*_{*DN*}) verdampft.

27. Vorrichtung nach Anspruch 5, dadurch gekennzeichnet, daß die Verteilung der armen Lösung (*ṁ*_{*a*}) im Hochdruckabsorber (HA) durch eine Düse (D5) erfolgt.

28. Vorrichtung nach Anspruch 27, dadurch gekennzeichnet, daß der Hochdruckabsorber (HA) einen Deckel (C3) mit quadratischem Querschnitt besitzt, in den die Düse (D5) eingelassen ist.

## Claims

1. Method for producing high-temperature available heat using low-temperature waste heat, whereby a mixture of low-boiling working fluid and high-boiling solvent is channelled through a closed circuit, consisting of a high-pressure part with high-pressure absorber (HA), a mid-pressure part with tube bundle mid-pressure absorber (MA) and a mid-pressure evaporator (V), a low-pressure part with desorber (A) and condenser (K), as follows:
a) the waste heat is fed into a solution rich in working fluid (*ṁ*_{*r*}₂) in the desorber (A), producing a weak solution (*ṁ*_{*a*}) and a working steam (*ṁ*_{*d*}) ;
b) the working steam (*ṁ*_{*d*}) is condensed in the condenser (K) by loss of heat to a coolant;
c) following an increase in pressure induced by a pump (P3), the condensed working fluid (*ṁ*_{*d*}) is heated in a heat exchanger (LW3) by means of an exchange of heat with a rich solution (*ṁ*_{*r*}₂) and is divided into a first partial stream (*ṁ* _{*d*}₂) and a second partial stream (*ṁ* _{*d1*});
d) the first partial stream (*ṁ* _{*d2*}) is evaporated in the mid-pressure evaporator (V) through the input of waste heat and absorbed by a rich solution (*ṁ* _{*r*}₁) by loss of absorption heat in the tubes of the mid-pressure absorber (MA);
e) the second partial stream (*ṁ* _{*d1*})*,* following a further increase in pressure induced by a pump (P5), is evaporated in the exterior of the tube bundle of the mid-pressure absorber (MA) by assimilation of the absorption heat produced in step d);
f) the evaporated second partial stream (*ṁ* _{*d1*}) is absorbed by a solution weak in working fluid (*ṁ* _{*a*}) in the high-pressure absorber (HA) by loss of available heat, whereby a first rich solution (*ṁ* _{*r1*}) is formed;
g)following an exchange of heat in the heat exchanger (LW2) with the weak solution (*ṁ*_{*a*}) fed into the high-pressure absorber (HA) for absorption, the first rich solution (*ṁ* _{*r1*}) is conveyed to the mid-pressure absorber (MA) for absorption according to step d), whereby a second rich solution (*ṁ* _{*r2*}) is formed; and
h) following an exchange of heat in the heat exchanger (LW3) with the condensed working fluid (*ṁ* _{*d*}) in accordance with step c) and a subsequent exchange of heat in the heat exchanger (LW1) with the weak solution (*ṁ* _{*a*}) coming from the desorber, the second rich solution (*ṁ* _{*r2*}) is conveyed to the desorber (A).

2. Method according to Claim 1, characterised by the fact that, before it enters the exterior of the tube bundle ofthe mid-pressure absorber (MA), the second fluid partial stream (*ṁ* _{*d1*}) of working fluid is mixed with a circulating stream 1 (*ṁ* _{*U1*}) so that absorption heat can be assimilated and, together with this, is fed via the circulation pump (P6) firstly through the exterior of the mid-pressure absorber (MA) for the assimilation of absorption heat and then through a steam separator (G1) which it exits in vapor form.

3. Method according to Claim 1, characterised by the fact that, before evaporation in the mid-pressure evaporator (V), the first fluid partial stream (*ṁ* _{*d*}₂ ) of working fluid is mixed with an evaporating circulation stream (*ṁ*_{*V*}) and then circulated through the evaporator tubes by the circulation pump (P4), whereby it absorbs heat from the waste heat carrier (*ṁ* _{*H2*}) and evaporates completely.

4. Method according to Claim 1, characterised by the fact that, before entering the high-pressure absorber (HA), an available heat carrier (*ṁ* _{*ND*}) is mixed with a circulating stream 2 (*ṁ* _{*U2*}) so that absorption heat can be assimilated and, together with this, is fed via the circulation pump (P7) firstly through the exterior of the tube bundle of the high-pressure absorber (MA) for the assimilation of available heat and then through a steam separator (G1) which it exits in vapor form.

5. Device for the implementation ofthe method according to Claim 1, with a high-pressure part with high-pressure evaporator and high-pressure absorber (HA), a mid-pressure part with mid-pressure absorber (MA) and mid-pressure evaporator (V), a low-pressure part with desorber (A) and condenser (K), a duct for the weak solution (*ṁ* _{*a*}), which connects the desorber (A) with the high-pressure absorber (HA) and in which a first and second heat exchanger (LW1 and LW2) are fitted for the exchange of heat with the rich solutions (*ṁ* _{*r1*} and *ṁ* _{*r2*}), a duct for condensed working fluid (*ṁ* _{*d*}, status 6) which leads from the condenser (K) via a first pump (P3) to a branch pipe which is connected via a first partial duct to the mid-pressure evaporator (V) and via a second partial duct, containing a further pump (P5) to the high-pressure evaporator, leading from there to the high-pressure absorber (HA), and a duct for the first rich solution (*ṁ* _{*r1*}) which connects the high-pressure absorber (HA) via a second heat exchanger (LW2), the mid-pressure absorber (MA) and the first heat exchanger (LW1) to the desorber (A), characterised by the fact that the mid-pressure absorber (MA) and the high-pressure evaporator together form a shell and tube heat exchanger, the tube bundle interior of which forms the mid-pressure absorber and is connected to the mid-pressure evaporator (V) and the duct for the first rich solution (*ṁ* _{*r1*}), the bundle exterior forming the high-pressure evaporator and being connected to the second partial duct for condensed working fluid (*ṁ* _{*d1*}), and characterised by the fact that a third heat exchanger (LW3) is situated in the duct for condensed working fluid (*ṁ* _{*d*}, status 7) between the first pump (P3) and the branch pipe so that heat can be exchanged with the duct for the second rich solution (*ṁ* _{*r2*}) at a point between the mid-pressure absorber (MA) and the first heat exchanger (LW1).

6. Device according to Claim 5, characterised by the fact that the desorber (A) and the condenser (K) are positioned vertically and contained in a prismatic casing with rectangular cross section and that the tube bundles are separated from one another by a partition (T2) which contains an insulation material.

7. Device according to Claim 6, characterised by the fact that the desorber (A) and the condenser (K) have a common entry chamber (K1) with rectangular cross section and two adjacent rectangular flanges (F1 and F2) and a partition (T1) which separates the vapor space of the condenser from the zone of the weak solution being conveyed into the desorber.

8. Device according to Claims 5 and 6, characterised by the fact that the desorber (A) and the condenser (K) have a common exit chamber (K2) with rectangular cross section and surfacemounted flange (F5) separating the pools for the weak solution (*ṁ*_{*a*}) and the condensed working fluid (*ṁ*_{*d*}), which results from the condensation of the working fluid vapor evaporated in the desorber, by means of a deflecting blade (B4) for the weak solution, a demister (M1) for the working fluid vapor to pass through and a partition (B5).

9. Device according to Claim 6, characterised by the fact that horizontal baffles (B1, B2, B3) for guiding a waste heat carrier (*ṁ* _{*H1*}) are fitted in the exterior of the tube bundle of the desorber (A).

10. Device according to Claim 9, characterised by the fact that the second rich solution (*ṁ*_{*r2*}) is distributed in the tube bundle of the desorber (A) by means of a nozzle (D1).

11. Device according to Claims 6 and 10, characterised by the fact that the preferred cross section of the tube bundle of the desorber (A) is square.

12. Device according to Claims 6 and 10, characterised by the fact that the desorber (A) and the condenser (A) have a common cover (C1) with rectangular cross section in which the nozzle (D1) for feeding in the second rich solution (*ṁ* _{*r2*}) is embedded.

13. Device according to Claim 5, characterised by the fact that the mid-pressure evaporator (V) and the mid-pressure absorber (MA) are positioned vertically and contained in a prismatic casing with rectangular cross section and that the tube bundles are separated from one another by a partition (T2) which contains an insulation material.

14. Device according to Claim 13, characterised by the fact that the mid-pressure evaporator (V) and the mid-pressure absorber (MA) have a common entry chamber (K3) with rectangular cross section and two adjacent rectangular flanges (F6 and F7) and a partition (T3) which separates the distributor zone of the evaporator from that of the mid-pressure absorber.

15. Device according to Claims 5 and 13, characterised by the fact that the mid-pressure evaporator (V) and the mid-pressure absorber (MA) have a common exit chamber (K4) with rectangular cross section and surface-mounted flange (F10) separating the pools for the second rich solution (*ṁ* _{*r2*}) and the circulating stream (*ṁ* _{*V*}), conveyed in fluid form together with the first partial stream (*ṁ* _{*d2*}) via the pump (P4) to distributor nozzles (D2) and (D3), by means of a deflecting blade (B9) for the circulating stream (*ṁ* _{*V*}), a demister (M2) which is passed through by the evaporated first partial stream (*ṁ*_{*d*}₂) resulting from the feed of waste heat via a waste heat carrier (*ṁ*_{*H*}₂),and a partition (B10).

16. Device according to Claim 13, characterised by the fact that horizontal baffles (B6, B7, B8) for guiding a waste heat carrier (*ṁ*_{*H*}₂) are fitted in the exterior of the tube bundle of the evaporator (V).

17. Device according to Claim 13, characterised by the fact that horizontal baffles (B11, B12, B13) are fitted in the exterior of the tube bundle of the mid-pressure absorber (MA) for guiding the mix (*ṁ* _{*U1*} + *ṁ* _{*d1*}) which evaporates during circulation around the tube bundle by precisely the (*ṁ* _{*d1*}) portion.

18. Device according to Claim 5, characterised by the fact that the fluid (*ṁ* _{*V*} + *ṁ* _{*d2*}) is distributed in the mid-pressure evaporator (V) by means of two nozzles (D2 and D3).

19. Device according to Claim 5, characterised by the fact that the first rich solution (*ṁ*_{*r*}₁) is distributed in the mid-pressure absorber (MA) by means of a nozzle (D4).

20. Device according to Claim 5, characterised by the fact that the mid-pressure evaporator (V) and the mid-pressure absorber (MA) have a common cover (C2) in which jets (D2, D3 and D4) are embedded.

21. Device according to Claim 13, characterised by the fact that the preferred cross section of the tube bundle ofthe mid-pressure absorber (MA) is square.

22. Device according to Claim 13, characterised by the fact that the mid-pressure evaporator (V) has a rectangular cross section where the dimensions of the sides have a ratio of two to one.

23. Device according to Claim 5, characterised by the fact that the high-pressure absorber (HA) is contained in a prismatic casing with square cross section.

24. Device according to Claim 23, characterised by the fact that the high-pressure absorber (HA) has an entry chamber (K5) with square cross section and two adjacent flanges (F11) and (F12).

25. Device according to Claims 5 and 23, characterised by the fact that the high-pressure absorber (HA) has an entry chamber K6 with square cross section and a surface-mounted flange (F15) for receiving the first rich solution (*ṁ* _{*r1*}).

26. Device according to Claim 23, characterised by the fact that horizontal baffles (B14, B15, B16) are fitted in the exterior of the tube bundle of the high-pressure absorber (HA) for guiding the mix (*ṁ* _{*U2*} + *ṁ* _{*DN*}) which evaporates during circulation around the tube bundle by precisely the (*ṁ* _{*DN*}) portion.

27. Device according to Claim 5, characterised by the fact that the weak solution (*ṁ*_{*a*}) is distributed in the high-pressure absorber (HA) by means of a nozzle (D5).

28. Device according to Claim 27, characterised by the fact that the high-pressure absorber (HA) has a cover (C3) with square cross section in which the nozzle (D5) is embedded.

## Revendications

1. Procédé générateur de chaleur utilitaire à température élevée par mise en oeuvre de chaleur basse température produite par des déchets, un mélange opérationnel composé de moyens de travail bouillant facilement et de solvants bouillant difficilement circule, selon les étapes décrites ci-après, dans un circuit fermé composé d'un étage haute pression à absorbeur haute pression (HA), d'un étage moyenne pression à absorbeur moyenne pression (MA) à faisceau de tubulures, d'un évaporateur moyenne pression (V) et d'un étage basse pression à éjecteur (A) et condenseur (K):
a) La chaleur des déchets est conduite vers une solution (*ṁ*_{*r*}₂) riche en moyens de travail située dans l'éjecteur (A), ce qui engendre une solution pauvre (*ṁ*_{*a*}) ainsi que de la vapeur du moyen de travail (*ṁ*_{*d*});
b) Cette vapeur du moyen de travail (*ṁ*_{*d*}) se condense dans le condenseur (K) et communique ainsi sa chaleur à un fluide de refroidissement;
c) Une pompe (P3) hausse la pression du moyen de travail condensé (*ṁ*_{*d*}) qui s'échauffe dans un échangeur thermique (LW3) en recevant la chaleur de la solution riche (*ṁ*_{*r*}₂), le moyen de travail condensé (*ṁ*_{*d*}) étant ensuite divisé en un premier flux partiel (*ṁ*_{*d*}₂) et un second flux partiel (*ṁ*_{*d*}₁);
d) Le premier flux partiel (*ṁ*_{*d*}₂) s'évapore dans l'évaporateur moyenne pression (V) sous l'effet d'un apport de chaleur produit par les déchets, et est ensuite absorbé par une solution riche (*ṁ*_{*r*}₁) dans les tubulures de l'absorbeur moyenne pression (MA), cette absorption dégageant de la chaleur;
e) Après avoir subi une nouvelle hausse de pression via une pompe (P5), le second flux partiel (*ṁ*_{*d*}₁) s'évapore dans l'espace extérieur du faisceau de tubulures formant l'absorbeur moyenne pression (MA), lorsqu'il (*ṁ*_{*d*}₁) reçoit la chaleur d'absorption provenant de l'étape d);
f) Dans l'absorbeur haute pression (HA), le second flux partiel (*ṁ*_{*d*}₁) évaporé est absorbé par la solution (*ṁ*_{*d*}) pauvre en moyens de travail tout en dégageant de la chaleur utilitaire, ce qui forme une première solution riche (*ṁ*_{*r*}₁);
g) Après un échange de chaleur dans l'échangeur thermique (LW2) avec la solution pauvre *ṁ*_{*a*} amenée à l'absorbeur haute pression (HA) pour absorption, la première solution riche (*ṁ*_{*r*}₁) est amenée à l'absorbeur moyenne pression (MA) pour absorption selon l'étape d), ce qui crée une seconde solution riche (*ṁ*_{*r*}₂); et
h) Après échange de chaleur dans l'échangeur thermique (LW3) avec le moyen de travail condensé (*ṁ*_{*d*}) conformément à l'étape c), et après un échange consécutif de chaleur dans l'échangeur thermique (LW1) avec la solution pauvre (*ṁ*_{*a*}) en provenance de l'éjecteur, la seconde solution riche (*ṁ*_{*r*}₂) est conduite à l'éjecteur.

2. Procédé selon la revendication 1, caractérisé en ce que le second flux partiel liquide (*ṁ*_{*d*}₁) du moyen de travail, avant d'entrer dans l'espace extérieur du faisceau de tubulures de l'absorbeur moyenne pression (MA), est mélangé à un flux de brassage 1 (*ṁ*_{*U*}₁) qui lui communique sa chaleur d'absorption, et en ce que ce second flux plus celui de brassage gagnent via la pompe de brassage (P6) l'espace extérieur de l'absorbeur moyenne pression (MA) pour absorber la chaleur et traversent ensuite un séparateur de vapeur (G1) dont ils sortent sous forme de vapeur.

3. Procédé selon la revendication 1, caractérisé en ce que le premier flux partiel liquide (*ṁ*_{*d*}₂) du moyen de travail se mélange à un flux de brassage (*ṁ*_{*V*}) pour évaporateur avant évaporation dans l'évaporateur moyenne pression (V), et que le mélange est ensuite brassé dans les tubulures de l'évaporateur par le biais de la pompe de brassage (P4), et qu'il s'évapore complètement par absorption de la chaleur provenant du fluide porteur de la chaleur produite par les déchets (*ṁ*_{*H*}₂).

4. Procédé selon la revendication 1, caractérisé en ce qu'un fluide porteur de la chaleur produite par les déchets (*ṁ*_{*ND*}) se mélange, avant de pénétrer dans l'absorbeur haute pression (HA), à un flux de brassage 2 (*ṁ*_{*U*}₂) pour absorber la chaleur utilitaire, et que le mélange refoulé par une pompe de brassage (P7) traverse l'espace extérieur du faisceau de tubulures de l'absorbeur haute pression (HA) pour absorber la chaleur utilitaire, et qu'il est conduit ensuite à un séparateur de vapeur (G2) dont il ressort sous forme de vapeur.

5. Dispositif permettant d'exécuter le procédé selon la revendication 1, caractérisé par un étage haute pression comprenant un évaporateur haute pression et l'absorbeur haute pression (HA), par un étage moyenne pression comprenant un absorbeur moyenne pression (MA) et l'évaporateur moyenne pression (V), par un étage basse pression à éjecteur (A) et un condenseur (K), une conduite pour la solution pauvre (*ṁ*_{*a*}) qui relie l'éjecteur (A) avec l'absorbeur haute pression (HA), et dans lequel dispositif un premier et un second échangeurs thermiques (LW1 et LW2) sont disposés pour permettre l'échange de chaleur avec les solutions riches (*ṁ*_{*r*}₁ et *ṁ*_{*r*}₂), par une conduite où circule le moyen de travail condensé (*ṁ*_{*d*}, état 6) et qui va du condenseur (K) à une première pompe (P3) puis gagne une bifurcation reliée par une première conduite partielle à l'évaporateur moyenne pression (V) et par une seconde conduite partielle (sur laquelle est intercalée une autre pompe (P5)) à l'évaporateur haute pression, puis gagne l'absorbeur haute pression (HA), ainsi que par une conduite où circule la première solution riche (*ṁ*_{*r*}₁) et qui relie l'absorbeur haute pression (HA) avec l'éjecteur (A) via le deuxième échangeur thermique (LW2), l'absorbeur moyenne pression (MA) et le premier échangeur thermique (LW1), caractérisé en ce que l'absorbeur moyenne pression (MA) et l'évaporateur haute pression sont configurés en échangeur thermique à faisceau de tubulures au compartiment intérieur duquel, formant l'absorbeur moyenne pression, sont reliés l'évaporateur moyenne pression (V), la conduite où circule la première solution riche (*ṁ*_{*r*}₁), et au compartiment extérieur duquel formant l'évaporateur haute pression est reliée la deuxième conduite partielle pour moyen de travail condensé (*ṁ*_{*d*}₁), et en ce que sur la conduite pour moyen de travail condensé (*ṁ*_{*d*}, état 7) est intercalé, entre la première pompe P3 et la bifurcation, un troisième échangeur thermique (LW3) permettant l'échange de chaleur avec la conduite où circule la seconde solution riche (*ṁ*_{*r*}₂), à un endroit situé entre l'absorbeur moyenne pression (MA) et le premier échangeur thermique (LW1).

6. Dispositif selon la revendication 5, caractérisé en ce que l'éjecteur (A) et le condenseur (K) sont disposés verticalement dans un caisson prismatique de section rectangulaire et que leurs faisceaux de tubulures sont séparés les uns des autres par une cloison séparatrice (T2) contenant un matériau isolant.

7. Dispositif selon la revendication 6, caractérisé en ce que l'éjecteur (A) et le condenseur (K) possèdent une chambre d'entrée commune (K1) de section rectangulaire et deux flasques rectangulaires limitrophes (F1 et F2) ainsi qu'une cloison (T1) séparant le compartiment à vapeur du condenseur, du compartiment où afflue la solution pauvre de l'éjecteur.

8. Dispositif selon les revendications 5 et 6, caractérisé en ce que l'éjecteur (A) et le condenseur (K) possèdent une chambre de sortie (K2) commune de section rectangulaire et un flasque superposé (F5), laquelle (K2) sépare les uns des autres les puisards respectivement à solution pauvre (*ṁ*_{*a*}) et à moyen de travail (*ṁ*_{*d*}) liquéfié formé par condensation de la vapeur de ce dernier dans l'éjecteur, par une tôle déviatrice (B4) de la solution pauvre, un séparateur de gouttes (M1) laissant passer la vapeur du produit de travail et par une cloison séparatrice (B5).

9. Dispositif selon la revendication 6, caractérisé en ce que dans l'espace extérieur du faisceau de tubulures de l'éjecteur (A) se trouvent des chicanes horizontales (B1, B2, B3) prévues pour guider un fluide (*ṁ*_{*H*}₁) porteur de la chaleur produite par les déchets.

10. Dispositif selon revendication 9, caractérisé en ce que la distribution de la seconde solution riche (*ṁ*_{*r*}₂) sur le faisceau de tubulures de l'éjecteur (A) est assurée par une buse (D1).

11. Dispositif selon les revendications 6 et 10, caractérisé en ce que le faisceau de tubulures de l'éjecteur (A) présente une section de préférence carrée.

12. Dispositif selon les revendications 6 et 10, caractérisé en ce que l'éjecteur (A) et le condenseur (A) présentent un couvercle commun (C1) de section rectangulaire dans lequel est enchâssée la buse (Dl) introductrice de la seconde solution riche (*ṁ*_{*r*}₂).

13. Dispositif selon la revendication 5, caractérisé en ce que l'évaporateur moyenne pression (V) et l'absorbeur moyenne pression (MA) sont logés à la verticale dans un caisson prismatique de section rectangulaire et en ce que leurs faisceaux de tubulures sont séparés l'un de l'autre par une cloison séparatrice (T4) contenant un produit isolant.

14. Dispositif selon la revendication 13, caractérisé en ce que l'évaporateur moyenne pression (V) et l'absorbeur moyenne pression (MA) présentent une chambre d'admission commune (K3) de section rectangulaire et deux flasques limitrophes rectangulaires (F6 et F7) ainsi qu'une cloison (T3) qui sépare le compartiment distributeur de l'évaporateur, de celui de l'absorbeur moyenne pression.

15. Dispositif selon les revendications 5 et 13, caractérisé en ce que l'évaporateur moyenne pression (V) et l'absorbeur moyenne pression (MA) présentent une chambre de sortie commune (K4) de section rectangulaire et un flasque superposé (F10), laquelle (K4) sépare les uns des autres les puisards pour la seconde solution riche (*ṁ*_{*r*}₂) et le flux de brassage (*ṁ*_{*V*}) refoulé sous forme liquide avec le premier flux partiel (*ṁ*_{*d*}₂) par la pompe (P4) vers les buses distributrices (D2) et (D3), par le biais d'une tôle déviatrice (B9) du flux de brassage (*ṁ*_{*V*}), d'un séparateur de gouttes (M2) que traverse le premier flux partiel évaporé (*ṁ*_{*d*}₂) formé par apport de chaleur des déchets au moyen d'un fluide porteur de cette chaleur (*ṁ*_{*H*}₂) et par une cloison séparatrice (B10).

16. Dispositif selon la revendication 13, caractérisé en ce que dans l'espace extérieur du faisceau de tubulures de l'évaporateur (V) sont prévues des chicanes en tôle horizontales (B6, B7, B8) servant à guider le fluide porteur de la chaleur des déchets (*ṁ*_{*H*}₂).

17. Dispositif selon la revendication 13, caractérisé en ce que dans l'espace extérieur du faisceau de tubulures de l'absorbeur moyenne pression (MA) sont prévues des chicanes en tôle horizontales (B11, B12, B13) servant à guider le mélange (*ṁ*_{*U*}₁ + *ṁ*_{*d*}₁) dont exactement la part (*ṁ*_{*d*}₁) s'évapore pendant que le flux de mélange baigne le faisceau de tubulures.

18. Dispositif selon la revendication 5, caractérisé en ce que la distribution du liquide (*ṁ*_{*V*} + *ṁ*_{*d*}₂) dans l'évaporateur moyenne pression (V) est assurée par deux buses (D2) et (D3).

19. Dispositif selon la revendication 5, caractérisé en ce que la distribution de la première solution riche (*ṁ*_{*r*}₁) dans l'absorbeur moyenne pression (MA) est assurée par une buse (D4).

20. Dispositif selon la revendication 13, caractérisé en ce que l'évaporateur moyenne pression (V) et l'absorbeur moyenne pression (MA) présentent un couvercle commun (C2) dans lequel sont enchâssées les buses (D2, D3 et D4).

21. Dispositif selon la revendication 13, caractérisé en ce que le faisceau de tubulures de l'absorbeur moyenne pression (MA) présente une section de préférence carrée.

22. Dispositif selon la revendication 13, caractérisé en ce que l'évaporateur moyenne pression (V) présente une section rectangulaire dont les longueur et largeur d'arêtes diffèrent dans une proportion de deux à un.

23. Dispositif selon la revendication 5, caractérisé en ce que l'absorbeur haute pression (HA) est logé dans un caisson prismatique de section carrée.

24. Dispositif selon la revendiation 23, caractérisé en ce que l'absorbeur haute pression (HA) présente une chambre d'entrée (K5) de section carrée et deux flasques limitrophes (F11) et (F12).

25. Dispositif selon les revendications 5 et 23, caractérisé en ce que l'absorbeur haute pression (HA) présente, pour recevoir la première solution riche (*ṁ*_{*r*}₁), une chambre de sortie (K6) de section carrée à flasque superposé (F15).

26. Dispositif selon la revendication 23, caractérisé en ce que dans l'espace extérieur du faisceau de tubulure équipant l'absorbeur haute pression (HA) des chicanes en tôle (B14, B15, B16) ont été prévues pour guider le mélange (*ṁ*_{*U*}₂ + *ṁ*_{*DN*}) dont exactement la part (*ṁ*_{*DN*}) s'évapore pendant que le flux de mélange baigne le faisceau de tubulures.

27. Dispositif selon la revendication 5, caractérisé en ce que la distribution de la solution pauvre (*ṁ*_{*a*}) dans l'absorbeur haute pression (HA) est assurée par une buse (D5).

28. Dispositif selon la revendication 27, caractérisé en ce que l'absorbeur haute pression (HA) présente un couvercle (C3) de section carrée dans lequel est enchâssée la buse (D5).
